Europäisches Patentamt

**European Patent Office**

**Office européen des brevets**

(19)

(11) Publication number: **0 083 376**
**A1**

## EUROPEAN PATENT APPLICATION

(12)

published in accordance with Art. 158(3) EPC

(21) Application number: 82902089.0

(22) Date of filing: 07.07.82

Data of the international appli-
cation taken as a basis:

(86) International application number:
**PCT/JP 82/00256**

(87) International publication number:
**WO 83/00268 (20.01.83 83/2)**

(51) Int. Cl.³: **H 04 N 5/30**

(30) Priority: 13.07.81 JP 109065/81

(43) Date of publication of application: 13.07.83
**Bulletin 83/28**

(84) Designated Contracting States: **DE FR GB NL**

(71) Applicant: **SONY CORPORATION,**
**7-35 Kitashinagawa 6-Chome Shinagawa-ku,**
**Tokyo 141 (JP)**

(72) Inventor: **TAKESHITA, Kaneyoshi Atsugi Plant, Sony Co.,**
**14-1 Asahi-cho 4-chome Atsugi-shi,**
**Kanagawa-ken 243 (JP)**
Inventor: **OCHI, Shigeyuki Atsugi Plant, Sony Co.,**
**14-1 Asahi-cho 4-chome Atsugi-shi,**
**Kanagawa-ken 243 (JP)**

(74) Representative: **Thomas, Christopher Hugo et al, D**
**Young & Co 10 Staple Inn, London WC1V 7RD (GB)**

(54) **SOLID STATE IMAGE PICKUP DEVICE.**

(57) Solid state image pickup device in which signal charges obtained by a plurality of photodetectors (21) arranged in horizontal and vertical rows are read by a vertical transfer unit (22) extending along a vertical row of the photodetectors (21), are transferred at high speed from the transfer unit (22) to a storage unit (27), and are transferred for each of one or more horizontal photodetectors (21) from the storage unit (27) to a horizontal transfer unit (25). The signal charges are further transferred by the horizontal transfer unit (25) to an output unit (26). Before the signal charges are read out by the vertical transfer unit (22), unnecessary charges in the vertical transfer unit (22) can be swept out and transferred. An additional gate forming unit (30) and an additional charge absorption unit (32) are provided in this image pickup device so that the unnecessary charges in the vertical transfer unit (22) are swept and transferred in the same direction as the transfer direction of the signal charges to the storage unit (27) at high speed, thereby sending the unnecessary charges to the charge absorption unit (32).

0083376

S P E C I F I C A T I O N

SOLID STATE IMAGE PICKUP DEVICE

Technical Field

This invention relates to solid state image pickup devices comprising a charge transfer device, and more particularly is directed to improvements in a solid state image pickup device of the interline transfer type, wherein unnecessary charges in vertical transfer portions can be transferred to be swept out before signal charges are read out to the vertical transfer portions and then transferred thereby.

Technical Background

Solid state image pickup devices comprising a charge transfer device such as a charge coupled device (hereinafter referred to as a CCD) are classified broadly into the frame transfer type and the interline transfer type. Generally, the device of the frame transfer type includes a photo-sensing and vertical transfer portion, a storage portion and a horizontal transfer portion as principal constructional parts, while the device of the interline transfer type includes also a photo-sensing and vertical transfer portion and a horizontal transfer portion as principal constructional parts, but does not include a storage portion. However, for the purpose of mitigating deteriorations in the quality of a picture obtained in response to an image pickup signal output from the device of the interline transfer type, which are caused by undesirable phenomena called "smear" and "blooming", it has been proposed such a solid state image pickup device that contains a photo-sensing and vertical transfer portion in the form similar to that employed in the device of the interline transfer type, a horizontal transfer portion and a storage portion in the form similar to that employed in the device of the frame transfer type between the photo-sensing and vertical transfer portion and the horizontal transfer portion, as a development from the device of the interline transfer type.

Such a solid state image pickup device developed from the device of the interline transfer type is referred to as a solid state image pickup device of the hybrid transfer type hereinafter. The solid state image pickup device of the hybrid transfer type comprises a photo-sensing and vertical transfer portion which includs a plurality of photodetectors and vertical transfer portions each formed with, for example, a group of CCDs and provided along each of the vertical rows of the photodetectors, and is provided with transfer gate electrodes each extending on a position between each of the vertical rows of the photodetectors and the corresponding one of the vertical transfer portions, a horizontal transfer portion formed with, for example, another group of CCDs, an output portion coupled with the horizontal transfer portion, a storage portion formed with, for example, a further group of CCDs and provided between the photo-sensing and vertical transfer portion and the horizontal transfer portion, and a charge absorbing portion coupled with one end of each of the vertical transfer portions at one end of the photo-sensing and vertical transfer portion in the side opposite to the storage portion. With such a configuration, each of the photodetectors produces signal charge in response to the light received thereby and stores the produced signal charge therein. The signal charges stored in the photodiodes are read out to the vertical transfer portions according to a reading clock signal supplied to the transfer gate electrodes and then vertically transferred from the vertical transfer portions to the storage portion at high speed so that the signal charges produced in the photodetectors are shifted to storing and transfer areas in the storage portion. The signal charges produced in each horizontal row of the photodetectors and transferred to the strage portion are transferred in turn to the horizontal transfer portion and further horizontally transferred to the output portion, so that an image pickup signal output is obtained at a signal output terminal provided to the output portion.

With the above mentioned device of the hybrid transfer type, the regular storage of the signal charges in the photodetectors is achieved after the signal charges previously read out to the vertical transfer portions are vertically transferred to the storage portion at high speed. During a charge storing period in which the signal charges are stored in the photodetectors, charges produced in or leaking into the vertical transfer portions and excessive charges overflowing to the vertical transfer portions from the photodetectors are sent through the vertical transfer portions to the charge absorbing portion to be absorbed thereby, and further before the signal charges are read out to the vertical transfer portions from the photodetectors, each vertical transfer portion is arranged to perform a charge transfer operation so as to transfer the remaining charges therein in the direction contrary to the storage portion, that is, toward the charge absorbing portion provided at the end of the photo-sensing and vertical transfer portion in the side opposite to the storage portion, thereby to sweep out unnecessary charges therefrom. Accordingly, the unnecessary charges are prevented from mixing with the signal charges which are to be transferred to the storage portion, and since the vertical transfer of the signal charges in the vertical transfer portions to the storage portion is achieved at high speed within a short period, the charges leaking into the vertical transfer portions and the excessive charges overflowing to the vertical transfer portions are limited to be quite little during the period in which the vertical transfer of the signal charges is achieved. This results in that deteriorations in the quality of a reproduced picture obtained in response to the image pickup signal output, which are caused by the smear and the blooming, can be mitigated.

However, in the above described device of the hybrid transfer type, since the charge transfer for sweeping out the unnecessary charges in the vertical transfer portions is to be performed in the direction opposite to the direction of the vertical transfer of the signal charges to the storage portion, as mentioned above, it is required that two different kings of vertical charge transfers are performed in the respectives directions opposite to each other in each vertical transfer portion, and therefore the previously proposed device of the hybrid transfer type has been accompanied with the disadvantage that the configuration of vertical transfer electrodes for having the vertical transfer portions perform the charge transfer operation and a driving circuit arrangement for producing a vertical transfer clock signal and supplying it to the vertical transfer electrodes become complicated in order to achieve both of the two different kinds of vertical charge transfers.

Accordingly, it is an object of the present invention to provide a novel solid state image pickup device of the hybrid transfer type which is improved in configuration and in operation for sweeping out and absorbing unnecessary charges so as to avoid the foregoing disadvantage associated with the prior art.

## Disclosure of the Invention

According to an aspect of the present invention, a solid state image pickup device of the hybrid transfer type developed from a solid state image pickup device of the interline transfer type is provided with an additional gate electrode to which a bias voltage varying in a predetermined manner is supplied and an additional charge absorbing portion provided in relation to the additional gate electrode so that unnecessary charges in a vertical transfer portion are transferred to be swept out in the same direction as the direction of the vertical transfer of signal charges from the vertical transfer portions to a storage portion before signal charges are read out to the vertical transfer portions from photodetectors. In the thus constituted solid state image pickup device of the hybrid transfer type according to the present invention, the configuration of vertical transfer electrodes and a driving circuit arrangement for producing a vertical transfer clock signal and supplying it to the vertical transfer electrodes can be made so simplified, besides excessive charges arising in the charge storing period in which the signal charges are stored in the photodetectors can be eliminated very effectively due to the existence of the additional charge absorbing portion.


Brief Description of the Drawings

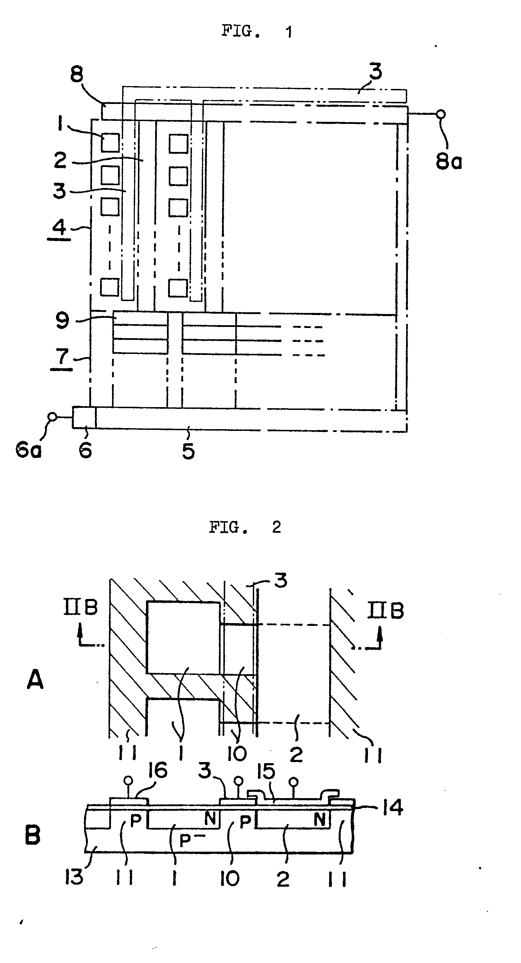

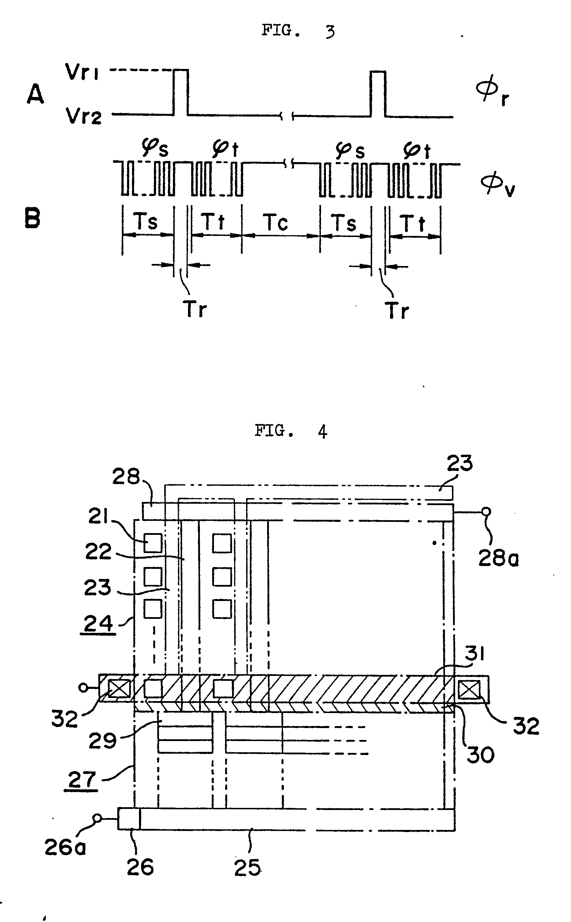

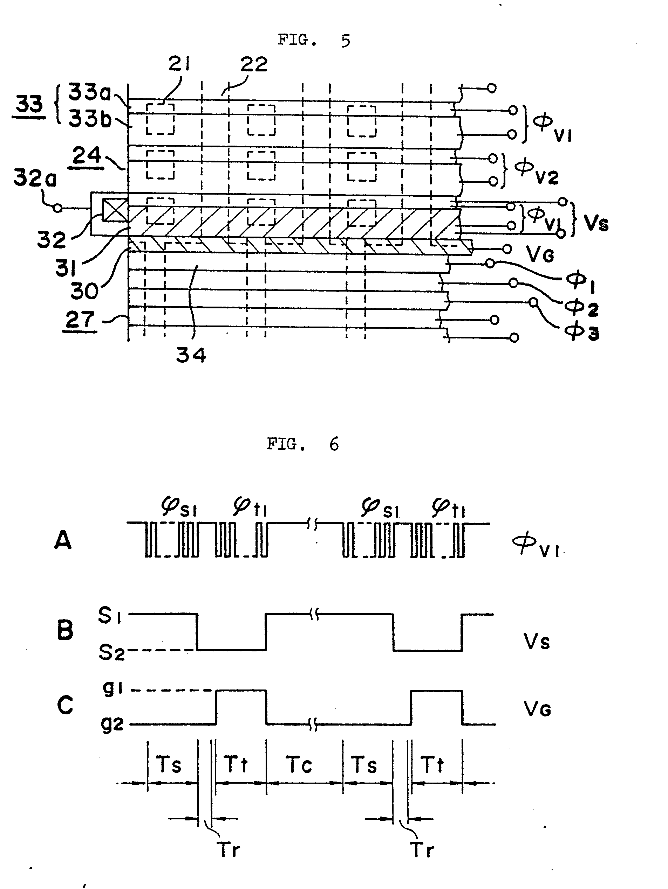

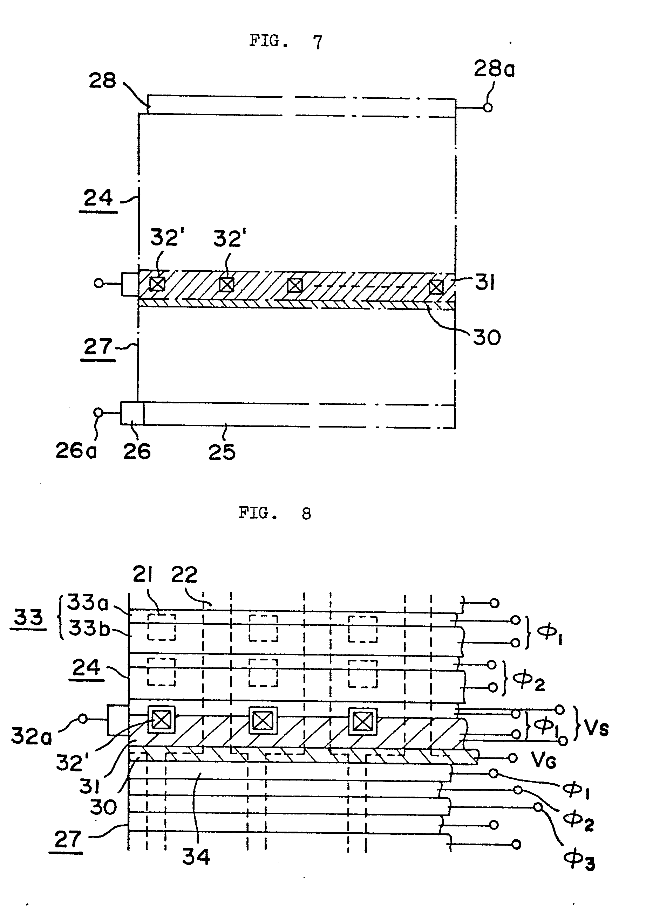

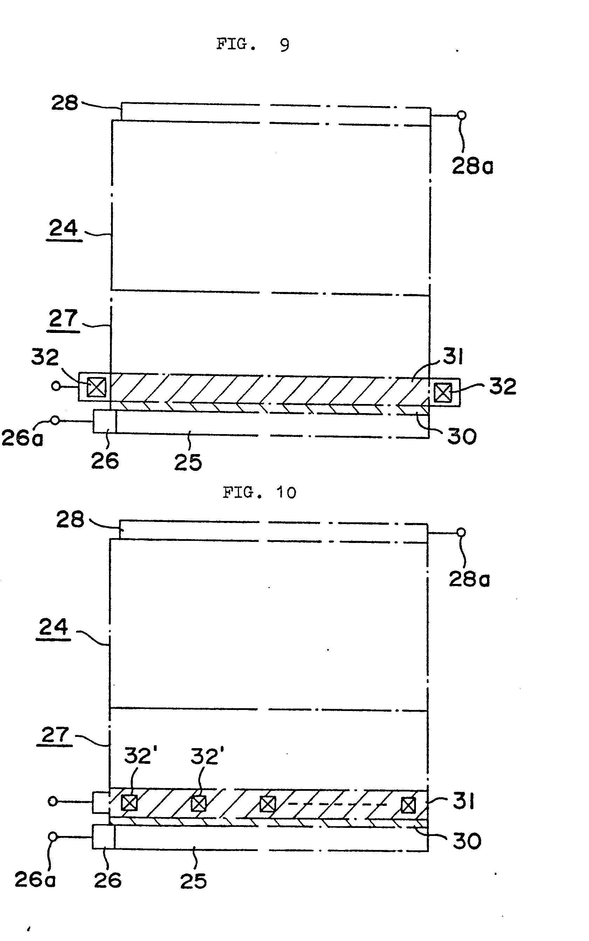

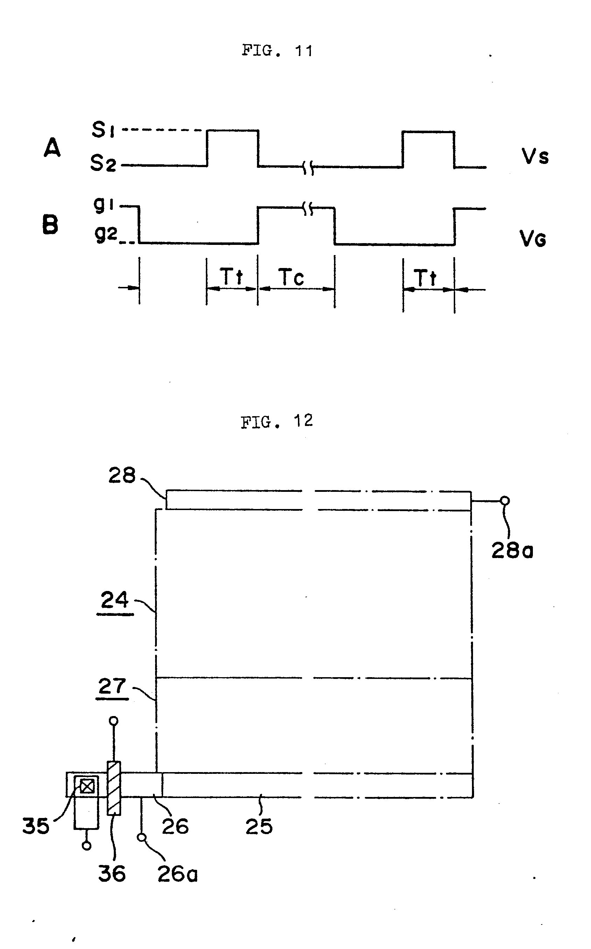

Figure 1 is a schematic plane view showing one example of a previously proposed solid state image pickup device of the hybrid transfer type; Figure 2 and Figure 3 are illustrations used for explaning in detail the configuration and operation of the solid state image pickup device shown in Figure 1; Figure 4 is a schematic plane view showing an example of a solid state image pickup device according to the present invention; Figure 5 is a plane view showing an enlarged portion of the example shown in Figure 4; Figure 6 is a waveform diagram used for explaining the operation of the example shown in Figure 4; Figure 7 is a schematic plane view showing another example of the solid state image pickup device according to the present invention; Figure 8 is a plane view showing an enlarged portion of the example shown in Figure 7; Figure 9 and Figure 10 are schematic plane views showing further examples of the solid state image pickup device according to the present invention, respectively; Figure 11 is a waveform diagram used for explaining the operation of the examples shown in Figure 9 and Figure 10; and Figure 12 is a schematic plane view showing a still further example of the solid state image pickup device according to the present invention.


Embodiments Most Preferable for Working of the Invention

First, to facilitate understanding of the embodiments of the invention, the detailed configuration and operation of a solid state image pickup device of the hybrid transfer type according to the prior art will be explained with reference to Figures 1 to 4.

An example of a previously proposed solid state image pickup device of the hybrid transfer type is constituted as shown in Figure 1, and comprises a photo-sensing and vertical transfer portion 4 which includes a plurality of photodetectors 1 provided to make horizontal and vertical rows and vertical transfer portions 2 each formed with a group of CCDs and provided along each of the vertical rows of the photodetectors 1, and is provided with transfer gate electrodes 3 each extending on a position between each of the vertical rows of the photodetectors 1 and the corresponding one of the vertical transfer portions 2, a horizontal transfer portion 5 formed with another group of CCDs, an output portion 6 coupled with the horizontal transfer portion 5, and a storage portion 7 formed with a further group of CCDs and provided between the photo-sensing and vertical transfer portion 4 and the horizontal transfer portion 5. At one end of the photo-sensing and vertical transfer portion 4 in the side opposite to the strage portion 7, a charge absorbing portion 8 is provided to be coupled with each one end of the vertical transfer portions 2 and supplied with a predetermined bias voltage from a terminal 8a. The storage portion 7 is connected to the other end of each of the vertical transfer portions 2 and contains therein a plurality of horizontal rows 9 of storing and transfer areas of the same number as the horizontal rows of the photodetectors 1. Further, a signal output terminal 6a is provided at the output portion 6.

Predetermined respective vertical transfer clock signals are applied to the vertical transfer portions 2 and the storage portion 7, respectively, and a predetermined horizontal transfer clock signal is applied to the horizontal transfer portion 5, so that a charge transfer operation is performed in each of the vertical transfer portions 2 and in the horizontal transfer portion 5. For example, signal charges obtained at the photodetectors 1 in response to the light received thereby for one field period are read out to the vertical transfer portions 2 according to a reading clock signal supplied to the transfer gate electrodes 3 and then transferred from the vertical transfer portions 2 to the storage portion 7 at high speed, so that the signal charges produced in each horizontal row of the photodetectors 1 are transferred to the corresponding one of the horizontal rows 9 of the storing and transfer areas in the storage portion 7. The signal charges transferred to each one of the horizontal rows 9 of the storing and transfer areas in the storage portion 7 are transferred in turn to the horizontal transfer portion 5 at each period corresponding to a horizontal blanking period, and then further transferred to the output portion 6 during a period corresponding to a horizontal video period and as a result of this an image pickup signal output is obtained at the signal output terminal 6a.

Going in details, the photo-sensing and vertical transfer portion 4 mentioned above contains transfer gate areas 10 provided between each vertical row of the photodetectors 1 and the corresponding one of the vertical transfer portions 2 and channel stop areas 11 provided at the position contiguous to the photodetectors in the side opposite to the transfer gate areas 10 and between each two adjacent photodetectors 1, as shown in Figure 2-A. As shown in Figure 2-B which shows a sectional view at the position indicated by arrows IIB-IIB in Figure 2-A, the above mentioned portions and areas are formed on a semiconductor substrate 13 of, for example, the N type and an insulating layer 14 is provided on the whole of these portions and areas. On the insulating layer 13, transfer gate electrodes 3, vertical transfer electrodes 15 and channel stopper electrodes 16 are provided over the respective transfer gate areas 10, the respective vertical transfer portions 2 and the respective channel stop areas 11, respectively.

In the solid state image pickup device of the hybrid transfer type thus constituted, for example, a reading clock

signal $\phi_r$ as shown in Figure 3-A is supplied to the transfer gate electrodes 3 and a vertical transfer clock signal $\phi_v$ as

shown in Figure 3-B is supplied to the vertical transfer electrodes 15. During a gate transferring period $T_r$ in which

the reading clock signal $\phi_r$ takes a high level $V_{rl}$, the

potential of the transfer gate areas 10 becomes high (deep) and consequently the signal charges stored in the photodetectors 1 are read out through the transfer gate areas 10 to the vertical transfer portions 2. Next, during a high speed

transfer period $T_t$ in which the vertical transfer clock signal

$\phi_v$ takes a part of a high speed transfer clock $\phi_t$ thereof,

the signal charges read out to the vertical transfer portions 2 are transferred to the storage portion 7 at high speed.

During a charge storing period $T_c$ following to the high speed

transfer period $T_t$, the photodetectors 1 receive the light to

0083376

produce signal charges in response to the amount of the received light and store them therein. Further during this period, the reading clock signal $\phi_r$ takes a low level $V_{r2}$, so that the potential of the transfer gate areas 10 becomes low (shallow), and signal charges produced in the vertical transfer portions 2 in response to the light entering in boundary areas between the photodetectors 1 and the transfer gate areas 10 or produced in the outside of the vertical transfer portions 2 in response to such light and leaking into the vertical transfer portions 2 and excessive charges overflowing to the vertical transfer portons 2 from the photodetectors 1, which are caused when the signal charges produced in the photodetectors 1 exceed the potential barrier formed by the transfer gate areas at low potential, are transmitted through the vertical transfer portions 2 to the charge absorbing portion 8 to be absorbed thereby. Then, during a sweeping period $T_s$ in which the vertical transfer clock signal $\phi_v$ takes a part of a sweeping clock $\varphi_s$, unnecessary charges remaining in the vertical transfer portions 2 are transferred to be swept out in the direction opposite to the direction of the high speed transfer of the signal charges to the storage portion 7, which is performed during the high speed transfer period $T_t$, to the charge absorbing portion 8.

After that, the gate transferring period $T_r$ in which the reading clock signal $\phi_r$ takes the high level $V_{r1}$ comes again and the signal charges newly stored in the photodetectors 1 are read out through the transfer gate areas 10 at high potential to the vertical transfer portions 2 from which the unnecessary charges have been transferred to be swept out, and each steps of the above mentioned operation are performed in succession repeatedly.

In such a manner as described above, the charge transfer for sweeping out the unnecessary charges in the vertical transfer portions 2, the charge transfer for reading out the signal charges stored in the photodetectors 1 to the vertical transfer portions 2 and the high speed transfer of the signal charges transferred to the vertical transfer portions 2 to the storage portion 7 are achieved.

Through the operation mentioned above, since the charges produced in or leaking into the vertical transfer portions 2 during the charge storing period $T_C$ and the excessive charges overflowing to the vertical transfer portions 2 during the charge storing period $T_C$ are absorbed by the charge absorbing portion 8 and further the unnecessary charges in the vertical transfer portions 2 are transferred to be swept out before the signal charges are read out to the vertical transfer portions 2 from the photodetectors 1, the signal charges to be transferred to the storage portion 7 are prevented from containing any undesirable charge therein, besides since the vertical transfer of the signal charges in the vertical transfer portions 2 the storage portions 7 is performed at high speed in a short time, the charges leaking into or overflowing to the vertical transfer portions 2 when the signal charges are transferred by the vertical transfer portions 2 are so reduced. Consequently, deteriorations in the quality of a picture obtained in response to the image pickup signal output, which are caused due to "smear" and "blooming", are extremely minigated.

However, in such an image pickup device as described above, as aforementioned, the charge transfer for sweeping out the unnecessary charges in the vertical transfer portions 2 is to be performed in the direction opposite to the direction of the vertical transfer of the signal charges to the storage portion and therefore it is required that two different kinds of vertical charge transfers are performed in the respective directions opposite to each other in each of the vertical transfer portions 2. This results in the disadvantage that the configuration of the vertical transfer electrodes and a driving circuit arrangement for generating the vertical transfer clock signal and supplying it to the vertical transfer electrodes become complicated, respectively.

Now, preferred embodiments of the present invention will be explained in detail with reference to Figures 4 to 12.

Figure 4 shows one example of a solid state image pickup device according to the present invention. This example comprises a photo-sensing and vertical transfer portion 24 which includes a plurality of photodetectors 21 arranged in horizontal and vertical rows and vertical transfer portions 22 each formed with a group of CCDs and extending along each of the vertical rows of the photodetectors 21, and is provided with transfer gate electrodes 23 each extending on a portion between each of the vertical rows of the photodetectors 21 and the corresponding one of the vertical transfer portions 22, a horizontal transfer portion 25 formed with another group of CCDs, an output portion 26 coupled with the horizontal transfer portion 25, and a storage portion 27 formed with a further group of CCDs and provided between the photo-sensing and vertical transfer portion 24 and the horizontal transfer portion 25. At one end of the photo-sensing and vertical transfer portion 24 in the side opposite to the storage portion 27, a charge absorbing portion 28 is provided to be coupled with each end of the vertical transfer portions 22 and supplied with a predetermined bias voltage from a terminal 28a. The storage portion 27 is connected to the other end of each of the vertical transfer portions 22 and contains therein a plurality of horizontal rows 19 of storing and transfer areas of the same number as the horizontal rows of the photodetectors 21. Further, an signal output terminal 26a is provided to the output portion 26. Vertical transfer electrodes are provided on the photo-sensing and vertical transfer portion 24 and the storage portion 27 though they are not shown in the Figures, and horizontal transfer electrodes are provided on the horizontal transfer portion 25. To these electrodes predetermined respective transfer clock signals are supplied, respectively, so that a charge transfer operation is achieved.

With the configuration aforesaid, signal charges for producing an image pickup signal output are dealt with in the same manner as those in the device shown in Figure 1, that is, the signal charges obtained in the photodetectors 21 in response to the amount of the light received thereby are read out to the vertical transfer portions 22 according to a reading clock signal supplied to the transfer gate electrodes 23 and then transferred from the vertical transfer portions 22 to the storage portion 27 at high speed, so that the signal charges produced in each horizontal row of the photodetectors 21 are transferred to the corresponding one of the horizontal rows 29 of the storing and transfer areas in the storage portion 27.

The signal charges transferred to each one of the horizontal rows 29 of the storing and transfer areas in the storage portion 27 are transferred in turn to the horizontal transfer portion 25 at each period corresponding to one horizontal blanking period, and then further transferred to the output portion 26 during a period corresponding to one horizontal video period and as a result of this the image pickup signal output is obtained at the signal output terminal 26a. In this case, the respective steps of the operation for storing the signal charges in the photodetectors 21, reading out the signal charges stored in the photodetectors 21 to the vertical transfer portions 22, vertically transferring the signal charges read out to the vertical transfer portions 22 to the storage portion 27 and so on are performed in the same manner as those in the device shown in Figure 1 and accordingly the detailed explanations thereof will be omitted.

This example of the device according to the present invention further comprises an additional gate electrode 30 provided to extend along the boundary area between the photo-sensing and vertical transfer portion 24 and the storage portion 27, and the final one of the vertical transfer electrodes on the photo-sensing and vertical transfer portion 24 is provided independently so as also to act as a sweeping electrode 31. In addition, additional charge absorbing portions 32, each of which is formed in, for example, a diffusion layer, are provided at positions corresponding to both end portions of the sweeping electrode 31 in the outside of the photo-sensing and vertical transfer portion 24. The positional relation among the vertical transfer electrodes, the additional gate electrode 30, the sweeping electrode 31 and the additional charge absorbing portions 32 is shown in detail in the enlarged partial view of Figure 5.

In Figure 5, the numeral 33 indicates the vertical transfer electrodes provided on the photo-sensing and vertical transfer portion 24, each of which is arranged to extend along each horizontal row of the photodetectors 21. The vertical charge transfer in the photo-sensing and vertical transfer portion 24 is performed with a two-phase clock signal in this case, and accordingly, each vertical transfer electrode 33 is formed with a charge storing electrode 33a and a potnetial barrier electrode 33b and vertical transfer clock signals $\phi_{v1}$

and $\phi_{v2}$, which constitute a two-phase clock signal, are supplied to alternate ones of the vertical transfer electrodes 33 and another alternate ones of the vertical transfer electrodes 33, respectively. The sweeping electrode 31, the final one of the vertical transfer electrodes 33 is supplied with a bias voltage

$V_s$ in addition to the vertical transfer clock signal $\phi_{v1}$ and the

additional charge absorbing portions 32 are supplied with a predetermined bias voltage from a terminal 32a. Further, the additional gate electrode 30 is supplied with a bias voltage $V_G$.

The numeral 34 indicates the vertical transfer electrodes provided on the storage portion 27, each of which is arranged to extend along each horizontal row 29 of the storing and transfer area.

The charge transfer in the storage portion 27 is performed with a three-phase clock signal in this case, and accordingly,

transfer clock signals $\phi_1$, $\phi_2$ and $\phi_3$, which constitute

a three-phase transfer clock signal, are supplied to the respective vertical transfer electrodes 34 in turn.

The vertical transfer clock signal $\phi_{v1}$ takes a part of a high speed transfer clock $\varphi_{t1}$ during each high speed transfer period $T_t$ and a part of a sweeping clock $\varphi_{s1}$ during each sweeping period $T_s$, as shown in Figure 6-A, in the manner similar to the vertical transfer clock signal $\phi_v$ shown in Figure 3-B. In this case, however, the high speed transfer clock $\varphi_{t1}$ and the sweeping clock $\varphi_{s1}$ are arranged to cause the respective vertical charge transfers in the same direction. The vertical transfer clock signal $\phi_{v2}$ is reversed in phase to the vertical transfer clock signal $\phi_{v1}$ shown in Figure 6-A, though it is not shown in the Figures, and takes a part of a high speed transfer clock $\varphi_{t2}$ and a part of a sweeping clock $\varphi_{s2}$. The bias voltage $V_s$ supplied to the sweeping electrode 31 takes a high level $s_1$ duering both the charge storing period $T_c$ and the sweeping period $T_s$ and a low level $s_2$ in the remaining period, as shown in Figure 6-B. The bias voltage $V_G$ supplied to the additional gate electrode 30 takes a high level $g_1$ during the high speed transfer period $T_t$ and a low level $g_2$ in the remaining period, as shown in Figure 6-C.

Then, the charge transfer for sweeping out unnecessary charges in the vertical transfer portions 22, which is performed also in this embodiment before the signal charges are read out to the vertical transfer portions 22 from the photodetectors 21, will be explained hereinafter.

During the sweeping period $T_s$ prior to the gate transferring period $T_r$, the unnecessary charges in the vertical transfer portions 22 transferred to be swept out according to the sweeping clocks $\varphi_{s1}$ and $\varphi_{s2}$ supplied to the vertical transfer electrodes 33 in the same direction as the direction of the vertical transfer at high speed of the signal charges to the storage portion 27. In this period, since the bias voltage $V_s$ supplied to the sweeping electrode 31 takes the high level $s_1$, the potential of an area of each vertical transfer portion 22 positioned under the sweeping electrode 31 becomes high (deep) and therefore the unnecessary charges transferred to be swept out in each vertical transfer portion 22 are collected under the sweeping electrode 31, and further, since the potential of channel stop areas each positioned between the areas of the vertical transfer portions positioned under the sweeping electrode 31 becomes sufficiently high (deep), the unnecessary charges collected under the sweeping electrode 31 flow through these channel stop areas at the high potential into the additional charge absorbing portions 32 to be absorbed thereby. In the same period, the bias voltage $V_g$ supplied to the additional gate electrode 30 takes the low voltage $g_2$ and therefore a gate formed under the additional gate electrode 30 is in the OFF state so as to prevent the unnecessary charges collected under the sweeping electrode 31 from leaking into the storage portion 27. In such a manner as aforementioned, the charge transfer for sweeping out the unnecessary charges in the vertical transfer portions 22 is achieved in the same direction as the direction of the vertical transfer of the signal charges to the storage portion 27.

Since the bias voltage $V_s$ supplied to the sweeping electrode 31 takes the high level $s_1$ also during the charge storing period $T_c$, excessive charges overflowing into the vertical transfer portions 22 in the charge storing period $T_c$

0083376

may be transmitted through the areas of the vertical transfer portions 22 and the channel stop areas all positioned under the sweeping electrode 31 to the additional charge absorbing portions 32 to be absorbed thereby. Accordingly, in the case of this embodiment, the charge absorbing portion 28 coupled with one end of each of the vertical transfer portion 22 can be eliminated.

In addition, during the high speed transfer period $T_t$,

since the bias voltage $V_s$ takes the low level $s_2$, the sweeping electrode 31 acts as the final one of the vertical transfer electrodes 33 and since the bias voltage $V_g$ takes the high

level $g_1$, the gate formed under the additional gate electrode 30 in the ON state, so that the signal charges are vertically transferred to the storage portion 27 at high speed.

Figures 7 and 8 show another example of the solid state image pickup device according to the present invention.

In Figures 7 and 8, there are many portions and areas provided with the respective reference numerals common to the Figures 4 and 5, each of which corresponds to the portion or area with the common reference numeral in Figures 4 and 5, and the detailed explanation of these portions and areas will be emitted.

In this example, additional charge absorbing areas 32' are provided at the positions of the photodetectors 21 which form the final one (one most close to the storage portion 27) of the horizontal rows of the photodetectors 21 in the photo-sensing and vertical transfer portion 24 in place of the additional charge absorbing portions 32 employed in the example shown in Figures 4 and 5. The charge transfer for sweeping out unnecessary charges in the vertical transfer portions 22, the absorption of the unnecessary charges transferred to be
swept out and the absorption of excessive charges caused in
the charge storing period are performed also in the manner
similar to those in the example shown in Figures 4 and 5, and
in this case the unncecessary charges and the excessive charges
are absorbed so effectively by the additional charge absorbing
areas 32' because the additional charge absorbing areas 32'
are placed ajacent to the respective areas of the vertical
transfer portions 22 positioned under the sweeping electrode
31. Further, the charge absorbing portion 28 can be eliminated
also in this example.

Figure 9 shows a variation of the solid state image
pickup device shown in Figures 4 and 5, wherein the positions
of the additional gate electrode 30, the sweeping electrode
31 and the additonal charge absorbing portions 32 are shifted
from the corresponding positions in Figures 4, and similarly,
Figure 10 shows a variation of the solid state image pickup
device shown in Figures 7 and 8, wherein the positions of the
additional gate electrode 30, the sweeping electrode 31 and
the additional charge absorbing areas 32' are shifted from
the corresponding positions in Figure 7. In each of the
examples shown in Figures 9 and 10, respectively, the
additional gate electrode 30 is provided to extend along the
boundary area between the storage portion 27 and the horizontal
transfer portion 25, and the final one of the vertical transfer
electrodes on the storage portion 27 is provided independently
so as also to act as the sweeping electrode 31. The additional
charge absorbing portions 32 are formed at positions
corresponding to both end portions of the sweeping electrode 31 in the outside of the storage portion 27, in the case of the example of Figure 9, and the additional charge absorbing areas 32' are formed with a predetermined distance therebetween at positions in the storage portion 27 under the sweeping electrode 31, in the case of the example of Figure 10. With each of the examples of Figure 9 and 10, the bias voltage $V_s$ supplied to the sweeping electrode 31 is arranged to take the high level $s_1$ during the high speed transfer period $T_t$ and the low level $s_2$ in the remaining period, as shown in Figure 11-A, and the bias voltage $V_g$ supplied to the additional gate electrode 30 is arranged to take the high level $g_1$ during the charge storing period $T_c$ and the low level $g_2$ in the remaining period, as shown in Figure 11-B.

In each of the examples shown in Figures 9 and 10, the unnecessary charges in the vertical transfer portions 22 are transferred to the storage portion 27 in the sweeping period $T_s$ and, in this connection, the storage portion 27 is arranged to perform the charge transfer operation also during the sweeping period $T_s$. Then, during the high speed transfer period $T_t$ in which the signal charges are transferred from the vertical transfer portions 22 to the storage portion 27, the unnecessary charges having previously transferred to the storage portion 27 are collected to an area in the storage portion 27 positioned under the sweeping electrode 31, to which the bias voltage at the high level $s_1$ is supplied, and transfrred through such an area to the additional charge absorbing areas 32 or 32' therethrough to be absorbed thereby. In this period, the bias voltage $V_g$ supplied to the additional gate electrode 30 takes the low level $g_2$ and therefore a gate formed under the additional gate electrode 30 is in the OFF state, so that the unnecessary charges are prevented from flowing into the horizontal transfer portion 25. Further, in the charge storing period $T_c$, the bias voltage $V_s$ supplied to the sweeping electrode 31 takes the low level $s_2$ and consequently the sweeping electrode 31 acts as the final one of the vertical transfer electrodes on the storage portion 27, and the bias voltage $V_g$ supplied to the additional gate electrode 30 takes the high level $g_1$ and consequently the gate formed under the additional gate electrode 30 is in the ON state, so that the signal charges are transferred from the storage portion 27 to the horizontal transfer portion 25.

Figure 12 shows a still further example of the solid state image pickup device according to the present invention. In this example, an additional charge absorbing portion 35 for absorbing unnecessary charges swept out is provided at a position contiguous to the output portion 26 connected to one end of the horizontal transfer portion 25 and an additional gate electrod 36 is also provided on a boundary area between the output portion 26 and the additional charge absorbing portion 35. The unnecessary charges in the vertical transfer portions 22 are transferred to the storage portion 27 in the sweeping period $T_s$ in the same manner as the examples of Figure 9 or 10. Then, during the high speed transfer period $T_t$ in which signal charges are transferred from the vertical transfer portions 22 to the storage portion 27, a bias voltage of a high level is supplied to the additional gate electrode 36 and unnecessary charges having previously transferred to the storage portion 27 are transferred through the horizontal transfer portion 25 and a gate formed under the additional
gate electrode 36 to the additional charge absorbing portion
35 to be absorbed thereby. During the charge storing period
$T_c$, the horizontal transfer portion 25 performs the horizontal
transfer of the signal charges and the bias voltage supplied
to the additional gate electrode 36 takes a low level so that
the gate formed under the additional gate electrode 36 is in
the OFF state.

Although the charge transfer in the photo-sensing
and vertical transfer portion 24 is performed with the two-
phase clock signal and the charge transfer in the storage
portion 27 is performed with the three-phase clock signal in
the above described examples, it is possible to arrange the
solid state image pickup device according to the present
invention so as to perform each of the charge transfers in the
photo-sensing and vertical transfer portion and in the storage
portion with any of clock signals of two-phase, three-phase,
four-phase and so on.

Applicabillity for Industrial Use

As described above, the solid state image pickup
device according to the present invention can produce an image
pickup signal output being superior in quality with transfer
electrodes and a driving circuit arrangement provided for the
transfer electrodes which are simplified in configuration,
respectively, and therefore is quite suitable for use in a
high-grade television camera miniaturized in size and
lightened in weight.

Claim for Patent

A solid state image pickup device comprising a plurality of photodetectors arranged in horizontal and vertical rows, vertical transfer portions each extending along a vertical row of said photodetectors, to which signal charges obtained in said photodetectors are read out, a strage portion to which the signal charges read out to said vertical transfer portions are transferred at high speed, a horizontal transfer portion to which the signal charges transferred to said storage portion are transferred in turn, an output portion to which the signal charges from said storage portion are transferred, and a charge absorbing portion provided for absorbing unnecessary charges, wherein before the signal charges obtained in said photodetectors are read out to said vertical transfer portions, the unnecessary charges in said vertical transfer portions are transferred to be swept out in the same direction as the direction of the transfer of the signal charges to the storage portion at high speed, so as to be sent to said charge absorbing portion.

I

FIG. 1

FIG. 2

2

**FIG. 3**

**FIG. 4**

FIG. 5

FIG. 6

4

FIG. 7

FIG. 8

5

FIG. 9

FIG. 10

6

FIG. 11

FIG. 12

# INTERNATIONAL SEARCH REPORT

International Application No. PCT/JP82/00256

0083376

| I. CLASSIFICATION OF SUBJECT MATTER (if several classification symbols apply, indicate all) [3] |
|---|
| According to International Patent Classification (IPC) or to both National Classification and IPC |
| Int. Cl.$^3$  H04N 5/30 |

## II. FIELDS SEARCHED

| Minimum Documentation Searched [4] | |
|---|---|
| Classification System | Classification Symbols |
| I P C | H04N 5/30 |

| | Documentation Searched other than Minimum Documentation to the Extent that such Documents are Included in the Fields Searched [5] |
|---|---|
| | Jitsuyo Shinan Koho          1981 – 1982 |
| | Kokai Jitsuyo Shinan Koho    1976 – 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP,A, 50-119521 (Nippon Electric Co., Ltd.) 19. September. 1975 (19.09.1975) | 1 |
| Y | JP,A, 51-56116 (Matsushita Electric Industrial Co., Ltd.) 17. May. 1976 (15.05.1976) | 1 |
| Y | JP,A, 53-70716 (Sony Corp.) 23. June. 1978  (23.06. 1978) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| September 24, 1982 (24.09.82) | October 4, 1982 (04.10.82) |
| International Searching Authority [1] | Signature of Authorized Officer [20] |
| Japanese Patent Office | |

Form PCT/ISA/210 (second sheet) (October 1981)